(19) **Europäisches Patentamt / European Patent Office / Office européen des brevets**

(11) **EP 2 535 172 B1**

(12) **FASCICULE DE BREVET EUROPEEN**

(45) Date de publication et mention
de la délivrance du brevet:
**28.08.2013   Bulletin 2013/35**

(51) Int Cl.:
**B29D 11/00** *(2006.01)*   **G02B 1/10** *(2006.01)*
**G02B 1/11** *(2006.01)*

(21) Numéro de dépôt: **12169091.1**

(22) Date de dépôt: **23.05.2012**

(54) **Procédé de fabrication de lentilles**

Herstellungsverfahren von Linsen

Lens manufacturing method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **14.06.2011   FR 1155179**

(43) Date de publication de la demande:
**19.12.2012   Bulletin 2012/51**

(73) Titulaire: **ESSILOR INTERNATIONAL (Compagnie Générale d'Optique)**
**94220 Charenton le Pont (FR)**

(72) Inventeurs:
• **Calba, Pierre-Jean**
  **94220 Charenton Le Pont (FR)**
• **Martin, Joseph**
  **94220 Charenton Le Pont (FR)**
• **Scherer, Karin**
  **94220 Charenton Le Pont (FR)**
• **Thuillier, Alain**
  **94220 Charenton Le Pont (FR)**
• **Willemin, Gérard**
  **94220 Charenton Le Pont (FR)**

(74) Mandataire: **Cabinet Plasseraud**
  **52, rue de la Victoire**
  **75440 Paris Cedex 09 (FR)**

(56) Documents cités:
**EP-A1- 0 614 957**      **WO-A1-2010/109154**
**FR-A1- 2 549 968**      **US-A1- 2006 158 747**
**US-A1- 2006 176 571**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de fabrication d'articles optiques comportant un revêtement minéral imperméable à l'eau déposé sur un revêtement dur résistant à l'abrasion et aux rayures, ledit procédé se caractérisant par une étape de conditionnement en atmosphère humide de l'article optique après durcissement du revêtement résistant à l'abrasion et avant dépôt du revêtement minéral par évaporation sous vide.

La plupart des lentilles ophtalmiques comportent aujourd'hui des revêtements durs résistant à l'abrasion et aux rayures. Ces revêtements durs sont le plus souvent déposés sur une couche de primaire élastomère, située entre le substrat et le revêtement dur et destinée à améliorer la résistance aux chocs des lentilles.

Il est connu en outre de traiter les lentilles ophtalmiques de façon à empêcher la formation de reflets gênants pour le porteur ou son interlocuteur. Ces revêtements anti-reflets sont généralement constitués d'un empilement multicouches avec une alternance de couches minérales à fort et à faible indice de réfraction déposées par évaporation sous vide. Ces revêtements antireflets, pour être efficaces, sont bien entendu déposés au dessus des revêtements durs.

Lors du développement de nouveaux revêtements anti-reflets possédant également des propriétés antistatiques apportées par une couche électroconductrice à base d'oxyde d'étain et d'indium (ITO, de l'anglais *indium tin oxyde*), la Demanderesse a observé l'apparition progressive de défauts cosmétiques blanchâtres et translucides, sous forme de points et de lignes s'étendant sur toute la surface des lentilles, visibles dans certaines conditions d'éclairage (lampe à arc et au tensioscope).

Des défauts cosmétiques similaires ont également été observés après dépôt de couches minérales à haut indice de réfraction à base de $TiO_2$ ou encore après dépôt d'un revêtement minéral à bas indice de réfraction à base de $SiO_2$ dopé à l'alumine commercialisé par exemple par la société Merck sous la dénomination L5 ou par la société Umicore sous la dénomination LIMA.

Tous ces revêtements semblaient avoir pour point commun d'être déposés par évaporation sous vide et d'être imperméables à l'eau. Pour des revêtements perméables à l'eau, par exemple des revêtements anti-reflets classiques à base de $ZrO_2$ et $SiO_2$, les défauts cosmétiques tels que décrits ci-dessus ne se forment pas.

Les conditions d'apparition de ces défauts cosmétiques et leur mécanisme de formation étaient toutefois difficiles à comprendre et il a fallu beaucoup de temps et un effort de recherche considérable pour identifier l'ensemble des paramètres intervenant dans la formation des défauts, émettre différentes hypothèses concernant les mécanismes physico-chimiques en jeu dans cette formation, tester ces hypothèses et proposer et tester différentes solutions pour tenter de prévenir ces défauts cosmétiques.

La Demanderesse avait notamment constaté que les défauts ne se présentaient que pour certains substrats organiques mais non pas sur d'autres : seuls les substrats organiques ayant une certaine affinité pour l'eau (taux de reprise en eau important après déshydratation) et dans lesquels l'eau diffuse lentement donnaient lieu aux défauts en question.

Par ailleurs, les défauts cosmétiques ne se présentaient généralement pas en l'absence de revêtements durs anti-abrasifs ou anti-chocs sous-jacents.

Les conditions de fabrication des revêtements semblaient également avoir une influence sur l'existence et l'importance des défauts cosmétiques.

De nombreux tests ont finalement permis de comprendre que les défauts cosmétiques étaient dus à une lente et irrégulière réhydratation de substrats hydrophiles qui avaient préalablement été déshydratés au cours de certaines étapes antérieures de formation des revêtements.

Les essais ont également permis de comprendre que la déshydratation du substrat organique entraînant cette réhydratation lente et irrégulière, avait lieu non pas au cours du dépôt des revêtements minéraux antireflets par évaporation sous vide, comme on le pensait initialement, mais pendant l'étape de durcissement à chaud du revêtement anti-abrasion ou anti-choc qui précédait le dépôt du revêtement minéral par évaporation sous vide.

Ce n'est qu'après identification de l'ensemble des paramètres et mécanismes décrits ci-dessus que la Demanderesse a pu proposer une solution, finalement assez simple, au problème que représentaient ces défauts cosmétiques. Cette solution consiste à réhydrater uniformément sur toute sa surface la lentille ayant subi l'étape de durcissement à chaud du revêtement antiabrasion, avant de procéder au dépôt du revêtement minéral imperméable à l'eau par évaporation sous vide. Les craintes que le dépôt sous vide désorbe de nouveau l'eau du substrat se sont avérées infondées et le procédé objet de la présente invention permet ainsi d'apporter une solution satisfaisante au problème de l'hydratation progressive et irrégulière de certains substrats organiques couverts à la fois d'un revêtement anti-abrasion durci à chaud et d'un revêtement minéral imperméable à l'eau.

La présente invention a par conséquent pour objet un procédé de fabrication d'un article optique comprenant,

(a) la mise à disposition d'un substrat organique à base d'un polymère organique ayant un taux de reprise en eau supérieur ou égal à 0,6 % en masse par rapport à la masse totale dudit substrat, choisi dans le groupe formé par les homopolymères et copolymères acryliques et méthacryliques, en particulier le poly(méthacrylate de méthyle), les homopolymères et copolymères thioacryliques et thiométhacryliques, le polyvinylbutyral (PVB), les polyuréthannes, les polythiouréthannes, les homopolymères et copolymères à base d'allylcarbonate de polyols, les copolymères thermoplastiques éthylène/acétate de vinyle (EVA), les polyesters tels que le poly(éthylène téréphtalate) et le poly(butylène téréphtalate), les polyépoxydes, les polyamides, les copolymères polycarbonate/polyesters, les copolymères de cyclo-oléfines tels que les copolymères éthylène/norbornène ou éthylène/cyclopentadiène, et les combinaisons de ces polymères, le taux de reprise en eau étant égale à la masse d'eau absorbée par le matériau après séchage puis stockage pendant 800 heures dans une enceinte à 50 °C sous une humidité relative de 100 % et à pression atmosphérique,

(b) une étape de formation d'un revêtement dur résistant à l'abrasion, sur ledit substrat organique, cette étape comprenant le chauffage du substrat à une température supérieure ou égale à 90 °C pendant une durée d'au moins 20 minutes,

(c) une étape d'exposition du substrat organique recouvert du revêtement dur résistant à l'abrasion à une atmosphère humide ayant une humidité relative comprise entre 50 et 80 % de manière à restituer au substrat organique l'eau évaporée au cours de l'étape (b),

(d) une étape de dépôt d'un revêtement minéral imperméable à l'eau par évaporation sous vide.

Le document US 2006/015747 traite d'une lentille en matière plastique comportant un film anti-reflet sur lequel un film fin est appliqué de manière à éviter que la poussière ne s'incruste ainsi que son procédé de fabrication.

Le document US 2006/017571 traite d'une lentille ophtalmique polarisée en matière plastique avec un film composite transparent présentant à la fois des propriétés polarisantes et une bonne résistance à l'impact.

Le document FR 2549968 vise en lentille en matière plastique ayant une dureté de surface élevée et une résistance à l'abrasion élevée et, en outre, une réflexion réduite sur la surface.

Aucun de ces trois documents ne traite du problème des défauts cosmétiques qui sous-tend la présente invention et ne divulgue le procédé de fabrication de lentilles, objet de la présente invention.

Comme expliqué en introduction, le problème technique que la présente invention se propose de résoudre ne se présente que pour certains substrats organiques, à savoir pour des substrats hydrophiles, i.e. ayant une certaine affinité pour l'eau caractérisée par un taux de reprise en eau, et dans lesquels l'eau ne diffuse que lentement.

Les substrats organiques pour lesquels ce problème est particulièrement important sont les verres organiques à haut indice de réfraction commercialisés par la société Mitsui Chemical Inc. sous les dénominations MR6, MR7, MR8 et MR10. Tous ces matériaux sont des polythiouréthanes thermodurcis et cette famille de polymères est par conséquent particulièrement préférée pour la présente invention.

La Demanderesse a constaté au cours des essais ayant abouti à la présente invention que le phénomène de réhydratation lente était particulièrement important pour les substrats MR7 et MR8, et en particulier pour le substrat MR8 qui constitue par conséquent un substrat particulièrement préféré pour la mise en oeuvre de la présente invention.

Dans l'étape (b) du procédé de la présente invention, le substrat organique est revêtu d'un revêtement dur résistant à l'abrasion connu en tant que tel. Il s'agit de préférence d'un revêtement anti-abrasif de type vernis nanocomposite à base de silice dispersée dans une matrice organique. De tels vernis sont décrits en détail, par exemple dans les brevets US 5 619 288 et EP 0 614 957 et dans la demande internationale WO 02/00561. Parmi les revêtements anti-abrasifs mis en oeuvre dans le cadre de l'invention, on notera les revêtements obtenus à partir d'époxyalkylalkoxysilanes, tels que le γ-glycidoxypropyltriméthoxysilane (GLYMO), et d'alkylalcoxysilanes, tels que le diméthyldiéthoxysilane (DMDES), ou d'hydrolysats de ces composés, et d'un catalyseur tel que l'aluminium acétylacétonate. Préférentiellement, le revêtement anti-abrasif contient aussi un liant colloïdal, tel qu'un oxyde métallique ou de la silice.

Ce revêtement anti-abrasif peut être appliqué selon des procédés connus, par exemple par centrifugation (*spin coating*), par immersion (*dip coating),* par étalement (*bar coating*), ou par pulvérisation (*spray coating*).

L'épaisseur de ce revêtement anti-abrasion est similaire à celle des revêtements anti-abrasion connus et est généralement comprise entre 1 et 15 μm, de préférence entre 2 et 10 μm.

Comme indiqué précédemment, cette formation du revêtement anti-abrasif comporte nécessairement une étape de chauffage du substrat organique revêtu à une température au moins égale à 90 °C pendant au moins 20 minutes. C'est au cours de cette étape de chauffage que se produit la déshydratation du substrat organique. Pour des durées de chauffage significativement plus courtes, le phénomène de déshydratation n'est pas suffisamment important. Il n'y a en principe pas de valeur limite supérieure pour la durée de chauffage. Celle-ci ne dépasse toutefois généralement pas environ 4 heures, et est de préférence égale à environ 3 heures.

L'étape (b) de formation du revêtement dur résistant à l'abrasion peut être précédée d'une étape (b') de dépôt d'un primaire élastomère. Il s'agit d'un traitement classique, bien connu de l'homme du métier, ayant pour principal effet d'accroître la résistance aux chocs des articles optiques. Des primaires appropriés sont décrits par exemple dans US 6 858 305 et US 7 357 503. Ce primaire, déposé sous forme de composition liquide puis éventuellement réticulé, absorbe non seulement les chocs reçus par le vernis anti-abrasif mais assure également la bonne adhérence du vernis anti-abrasif sur le substrat. Son épaisseur est généralement comprise entre 1 et environ 20 μm.

Les vernis anti-abrasion et les primaires élastomères éventuellement présents sont des couches perméables à l'eau, autrement dit, elles ont un effet barrière caractérisé par une valeur $B_{24h}$, telle que définie ci-après, inférieure ou égale à 0,1.

L'étape essentielle qui distingue le procédé selon l'invention des procédés connus, est l'étape (c), à savoir une étape d'hydratation de l'article optique, revêtu du vernis anti-abrasif et éventuellement d'un primaire sous-jacent, dans une atmosphère humide pendant une durée suffisante pour restituer au substrat organique l'eau évaporée au cours de l'étape (b).

Des essais ont montré que l'humidité relative au cours de l'étape (c) devait être ni trop importante ni trop faible. Ainsi, un taux d'humidité relative de 90 % ou plus ne permettait pas toujours d'obtenir des résultats satisfaisants. Pour des taux d'humidité relative trop faibles, la durée d'exposition nécessaire à l'obtention de bons résultats était excessivement longue. L'humidité relative de l'atmosphère au cours de l'étape (c) est par conséquent fixée à une valeur comprise entre 50 et 80 %, de préférence entre 50 et 75 %.

L'étape (c) ne nécessite pas forcément le chauffage de l'article optique et peut se faire à température ambiante (25 °C), ou même à une température inférieure à la température ambiante. La Demanderesse a observé que l'exposition des articles optiques pendant plusieurs jours à une température de 20 °C permettait de faire totalement disparaître les défauts cosmétiques.

L'étape (c) est de préférence mise en oeuvre à une température comprise entre 15 et 80 °C, en particulier entre 20 et 75 °C et de manière plus préférée entre 25 et 70 °C.

La durée de l'étape (c) est de préférence comprise entre 1 et 20 jours, plus préférentiellement entre 2 et 15 jours et en particulier entre 4 et 12 jours.

Les substrats hydratés, obtenus à l'issue de l'étape (c), peuvent être soumis directement au dépôt d'un revêtement anti-reflet par évaporation sous vide, ou bien ils peuvent subir un traitement de surface avant l'étape de dépôt sous vide. Comme indiqué en introduction, les nombreux essais réalisés par la Demanderesse ont permis de comprendre que les défauts cosmétiques se produisaient uniquement lorsque l'empilement déposé sur le vernis anti-abrasif était imperméable à l'eau ou comprenait au moins une couche imperméable à l'eau.

On entend ici par « couche ou empilement imperméable à l'eau », une couche ou un empilement de couches ayant un effet barrière à l'eau ($B_{24h}$) au moins égal à 0,15, de préférence au moins égal 0,2.

L'effet barrière à l'eau ($B_{24h}$) est déterminé en comparant la vitesse d'hydratation d'un substrat nu d'un article optique, dépourvu de tout revêtement, préalablement séché, à la vitesse d'hydratation d'un article optique préalablement séché dans les mêmes conditions que l'article témoin puis revêtu d'une couche imperméable ou d'un empilement de couches imperméable. Le paramètre est $B_{24h}$ est obtenu par la formule suivante

$$B_{24h} = 1 - \frac{m}{m_{substrat\ nu}}$$

où

$m$ = masse d'eau reprise par l'échantillon au cours des 24 heures dans une atmosphère à 50 °C et 100 % d'humidité, et

$m_{substrat\ nu}$ = masse d'eau reprise par le substrat nu dans les mêmes conditions.

Le dépôt d'un revêtement antireflets minéral imperméable à l'eau (étape (d)), comprenant de préférence au moins une couche évaporée à partir d'un des matériaux suivants : $TiO_2$ ou un composé d'oxyde de titane sous-stoechiométrique ($TiO_x$ avec x inférieur à 2), ITO ou oxyde d'indium, ou silice dopée à l'alumine, peut se faire de façon connue, par exemple selon les modes opératoires décrits dans FR 2943798 et FR 2913116.

**Exemple selon l'invention**

On dépose sur des verres organiques en polythiouréthanne (MR8) par centrifugation une solution thermodurcissable pour revêtement anti-abrasion (comprenant, par rapport au poids total de la composition, 22% de glycidoxypropylmethyldimethoxysilane, 62% de silice colloïdale contenue à 30% dans du méthanol, et 0,70% d'aluminium acétylacétonate) en une épaisseur d'environ 4 μm. Cette couche est ensuite soumise à une réticulation par chauffage pendant 3 heures à 100 °C. La solution thermodurcissable et le procédé d'obtention du revêtement anti-abrasion sont décrits à l'exemple 3 du brevet EP 0614957 B1.

Les verres revêtus sont ensuite posés sur des grilles dans une enceinte climatique où ils sont conservés pendant 5 jours à une température de 60 °C sous une humidité relative de 70 %.

Après cette étape d'hydratation, on soumet les verres à un traitement sous vide dans une machine vendue sous le nom SATIS 1200 DLF par la société Satisloh. L'empilement déposé est un empilement qui comporte, comme dernière couche, une couche de $SiO_2$ dopé à l'alumine comme décrite dans les demandes FR 2913116 ou FR 2903197.

Les verres sont ensuite inspectés à la lampe à arc immédiatement après le traitement. On n'observe alors aucun défaut cosmétique. Après une semaine de conservation dans des conditions ambiantes, aucun défaut cosmétique n'apparaît. Même un trempage dans de l'eau à température ambiante pendant 24 heures ne fait pas apparaître de défauts cosmétiques. Il en va de même d'une exposition des lentilles pendant 4 jours à une température de 40 °C.

On obtient des résultats identiques, c'est-à-dire l'absence totale de défauts cosmétiques en mettant en oeuvre l'étape d'hydratation pendant 14 jours à 20 °C et à une humidité relative de 50 %.

Lorsqu'on prépare des verres selon le protocole décrit ci-dessus, mais sans l'étape d'hydratation dans l'enceinte climatique (5 jours à une température de 60 °C sous une humidité relative de 70 %), des défauts cosmétiques visibles à la lampe à arc ou au tensiomètre apparaissent sur la majorité des verres au bout de quelques jours de stockage dans des conditions ambiantes (20 °C, humidité relative environ 50 %).

## Revendications

1. Procédé de fabrication d'un article optique comprenant,

   (a) la mise à disposition d'un substrat organique à base d'un polymère organique ayant un taux de reprise en eau supérieur ou égal à 0,6 % en masse par rapport à la masse totale dudit substrat, choisi dans le groupe formé par les homopolymères et copolymères acryliques et méthacryliques, les homopolymères et copolymères thioacryliques et thiométhacryliques, le polyvinylbutyral (PVB), les polyuréthannes, les polythiouréthannes, les homopolymères et copolymères à base d'allylcarbonate de polyols, les copolymères thermoplastiques éthylène/acétate de vinyle (EVA), les polyesters, les polyépoxydes, les polyamides, les copolymères polycarbonate/polyesters, les copolymères de cyclooléfines et les combinaison de ces polymères, le taux de reprise en eau étant égale à la masse d'eau absorbée par le matériau après séchage puis stockage pendant 800 heures dans une enceinte à 50 °C sous une humidité relative de 100 % et à pression atmosphérique,
   (b) une étape de formation d'un revêtement dur résistant à l'abrasion, sur ledit substrat organique, cette étape comprenant le chauffage du substrat à une température supérieure ou égale à 90 °C pendant une durée d'au moins 20 minutes,
   (c) une étape d'exposition du substrat organique recouvert du revêtement dur résistant à l'abrasion à une atmosphère humide ayant une humidité relative comprise entre 50 et 80 % de manière à restituer au substrat organique l'eau évaporée au cours de l'étape (b),
   (d) une étape de dépôt d'un revêtement minéral imperméable à l'eau par évaporation sous vide.

2. Procédé selon la revendication 1, **caractérisé par le fait que** le polymère organique est choisi parmi les polythiouréthannes thermodurcis.

3. Procédé selon la revendication 1 ou 2, **caractérisé par le fait que** l'humidité relative de l'atmosphère humide de l'étape (c) est comprise entre 50 et 75 %.

4. Procédé selon l'une quelconque des revendications précédentes, **caractérisé par le fait que** l'étape (c) est mise en oeuvre à une température comprise entre 15 et 80 °C, de préférence entre 20 et 75 °C et de manière plus préférée entre 25 et 70 °C.

5. Procédé selon l'une quelconque des revendications précédentes, **caractérisé par le fait que** la durée d'exposition du substrat recouvert du revêtement dur résistant à l'abrasion à une atmosphère humide est comprise entre 1 et 20 jours, de préférence entre 2 et 15 jours et en particulier entre 4 et 12 jours.

## Patentansprüche

1. Verfahren zur Herstellung eines optischen Gegenstands, umfassend:

   (a) Bereitstellen eines organischen Substrats auf Basis eines organischen Polymers mit einer Aufnahmerate für Wasser von über oder gleich 0,6 Masseprozent bezüglich der Gesamtmasse des Substrats, ausgewählt aus der Gruppe, bestehend aus den Acryl- und Methacryl-Homopolymeren und Copolymeren, den Thioacryl- und Thiomethacryl-Homopolymeren und Copolymeren, dem Polyvinylbutyral (PVB), den Polyurethanen, den Polythiourethanen, den Homopolymeren und Copolymeren auf Basis des Allylcarbonats von Polyolen, den thermoplastischen Ethylen/Vinylacetat-Copolymeren (EVA), den Polyestern, den Polyepoxiden, den Polyamiden, den Polycarbonat/Polyester-Copolymeren, den Copolymeren von zyklischen Olefinen und der Kombination dieser Polymere, wobei die Aufnahmerate für Wasser gleich der durch das Material absorbierten Wassermenge nach Trocknung ist nach Lagerung über 800 Stunden in einer Kammer bei 50 °C unter einer relativen Feuchtigkeit von 100 % und Atmosphärendruck,
   (b) einen Schritt der Bildung einer harten abriebfesten Beschichtung auf dem organischen Substrat, wobei dieser Schritt die Erhitzung des Substrats auf eine Temperatur von über oder gleich 90 °C für eine Dauer von mindestens 20 Minuten umfasst;
   (c) einen Schritt des Aussetzens des organischen Substrats, das beschichtet ist mit einer harten abriebfesten Beschichtung, einer feuchten Atmosphäre mit einer relativen Feuchtigkeit, die zwischen 50 und 80 % umfasst, um dem Substrat das Wasser zurückzuführen, das während Schritt (b) verdampft wird;
   (d) einen Schritt der Ablagerung einer mineralischen Schicht, die impermeabel für Wasser aus der Verdampfung unter Vakuum ist.

2. Verfahren nach Anspruch 1, **dadurch gekennzeichnet, dass** das organische Polymer ausgewählt wird aus den thermohärtbaren Polythiourethanen.

3. Verfahren nach Anspruch 1 oder 2, **dadurch gekennzeichnet, dass** die relative Feuchtigkeit der feuchten Atmosphäre von Schritt (c) zwischen 50 und 75 % umfasst.

4. Verfahren nach einem der vorhergehenden Ansprüche, **dadurch gekennzeichnet, dass** Schritt (c) bei einer Temperatur, umfassend zwischen 15 und 80 °C, vorzugsweise zwischen 20 und 75 °C und am meisten bevorzugt zwischen 25 und 70 °C, erfolgt.

5. Verfahren nach einem der vorhergehenden Ansprüche, **dadurch gekennzeichnet, dass** die Aussetzungsdauer des Substrats, das beschichtet ist mit einer harten Schicht, die abriebfest ist, einer feuchten Atmosphäre zwischen 1 und 20 Tagen, vorzugsweise zwischen 2 und 15 Tagen und insbesondere zwischen 4 und 12 Tagen umfasst.

**Claims**

1. Process for the manufacture of an optical article which comprises:

(a) making available an organic substrate based on an organic polymer having a degree of water uptake of greater than or equal to 0.6% by weight, with respect to the total weight of the said substrate, chosen from the group formed by acrylic and methacrylic homopolymers and copolymers, thioacrylic and thiomethacrylic homopolymers and copolymers, polyvinylbutyral (PVB), polyurethanes, polythiourethanes, homopolymers and copolymers based on polyol allyl carbonates, thermoplastic ethylene/vinyl acetate (EVA) copolymers, polyesters, polyepoxides, polyamides, polycarbonate/polyester copolymers, cycloolefin copolymers and the combinations of these polymers, the degree of water uptake being equal to the weight of water absorbed by the material after drying and then storing for 800 hours in a chamber at 50°C under a relative humidity of 100% and at atmospheric pressure,
(b) a stage of formation of a hard abrasion-resistant coating on the said organic substrate, this stage comprising the heating of the substrate at a temperature of greater than or equal to 90°C for a period of time of at least 20 minutes,
(c) a stage of exposure of the organic substrate covered with the hard abrasion-resistant coating to a humid atmosphere showing a relative humidity of between 50 and 80% so as to restore, to the organic substrate, the water evaporated during stage (b),
(d) a stage of deposition of a water-impermeable inorganic coating by vacuum evaporation.

2. The process according to Claim 1, wherein the organic polymer is chosen from thermoset polythiourethanes.

3. The process according to Claim 1 or 2, wherein the relative humidity of the humid atmosphere of stage (c) is between 50 and 75%.

4. The process according to any one of the preceding claims, wherein the stage (c) is carried out at a temperature of between 15 and 80°C, preferably between 20 and 75°C and more preferably between 25 and 70°C.

5. The process according to any one of the preceding claims, wherein the duration of exposure to a humid atmosphere of the substrate coated with the hard abrasion-resistant coating is between 1 and 20 days, preferably between 2 and 15 days and in particular between 4 and 12 days.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006015747 A
- US 2006017571 A
- FR 2549968
- US 5619288 A
- EP 0614957 A
- WO 0200561 A
- US 6858305 B
- US 7357503 B
- FR 2943798
- FR 2913116
- EP 0614957 B1
- FR 2903197